(19) Europäisches Patentamt
European Patent Office
Office européen des brevets

(11) Publication number: **0 108 476**
**A1**

(12) **EUROPEAN PATENT APPLICATION**

(21) Application number: 83305074.3

(51) Int. Cl.³: C 08 L 63/00

(22) Date of filing: 01.09.83

(30) Priority: 15.09.82 GB 8226266

(43) Date of publication of application: 16.05.84 Bulletin 84/20

(84) Designated Contracting States: BE CH DE FR GB IT LI NL SE

(71) Applicant: The British Petroleum Company p.l.c.
Britannic House Moor Lane
London EC2Y 9BU(GB)

(72) Inventor: Fogg, Sidney George
The British Petroleum Comp. p.l.c. Chertsey Road
Sunbury-on-Thames Middlesex, TW16 7LN(GB)

(72) Inventor: Wilson, Douglas
The British Petroleum Comp. p.l.c. Chertsey Road
Sunbury-on-Thames Middlesex, TW16 7LN(GB)

(74) Representative: Eastman, Hugh Leonard et al,
BP INTERNATIONAL LIMITED Patents and Licensing Division Chertsey Road
Sunbury-on-Thames Middlesex TW16 7LN(GB)

(54) **Epoxy resin composition.**

(57) A hardenable epoxy resin composition comprising a curable epoxy resin, a hardener for the epoxy resin and a polyetherimide having the general formula;

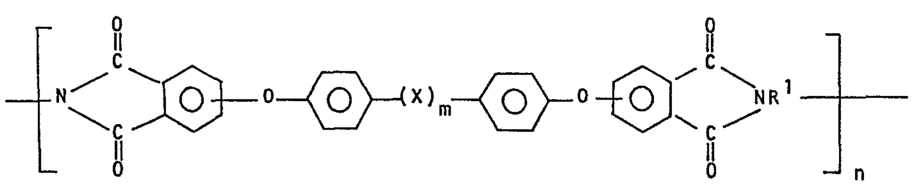

where

X is $C_yH_{2y}$, or $-\overset{O}{\overset{\|}{C}}-$, or $-S-$
y is a positive integer from 1 to 5
m is 0 or 1
n is a positive integer from 20 to 150 and
$R^1$ is an aromatic hydrocarbon radical having from 6 to 20 carbon atoms, or a cycloalkylene radical having from 2 to 20 carbon atoms or a divalent radical of the formula

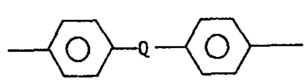

where

Q is $-O-$, $-\overset{O}{\overset{\|}{C}}-$, $-\overset{O}{\overset{\|}{S}}-$, $-S-$ or $C_xH_{2x}$

and

x is a positive integer from 1 to 5.
Preferably X is $C_3H_6$ and $R^1$ is preferably

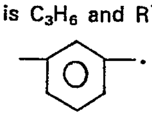

The compositions are particularly suitable for use in fibre composite materials.

EP 0 108 476 A1

Croydon Printing Company Ltd.

# EPOXY RESIN COMPOSITIONS

This invention relates to a hardenable epoxy resin composition, and in particular to a hardenable epoxy resin suitable for use in fibre reinforced articles.

Cured epoxy resins generally have a relatively low impact resistance. Also, in certain circumstances, it is preferable that the epoxy resin composition has a relatively high viscosity before curing. For example, it is known that the properties of a fibre composite laminate may be improved by controlling the viscosity of the matrix material, e.g. an epoxy resin, so that a relatively high pressure can be used during the curing of the fibres in order to reduce the void volume without excessive flow of the matrix material away from the reinforcing fibres. The viscosity of the resin at the curing temperature is preferably at least about 35 Poises ($gcm^{-1}s^{-1}$).

It is known to use inorganic materials such as silica, carbon black or metal powders to increase the viscosity of epoxy resin compositions, but these materials may have a deleterious effect on the physical properties of the cured resin e.g. increased water absorption.

Increasing the viscosity of the epoxy resin also enables certain solid hardeners to be used which tend to settle out of lower viscosity resins.

The applicants have found that the viscosity of an epoxy resin composition may be increased by the inclusion in the composition of a polyetherimide and that such compositions when cured may have an improved impact resistance.

Thus according to the present invention a hardenable epoxy resin composition comprises a curable epoxy resin, a hardener for the epoxy resin and a polyetherimide having the general formula;

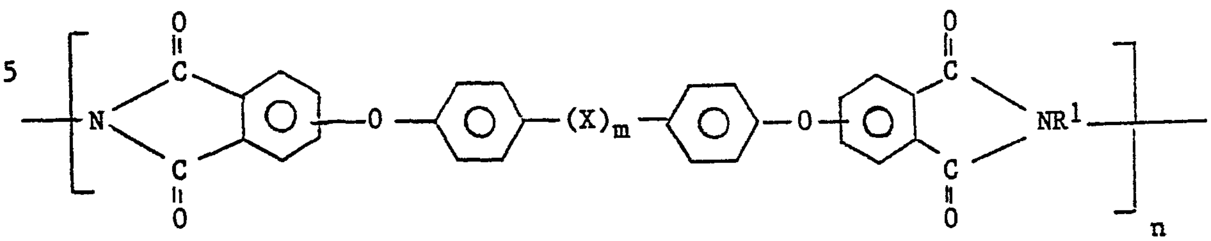

where X is $C_yH_{2y}$, or $-\overset{O}{\overset{\|}{C}}-$, or -S-

y is a positive integer from 1 to 5

m is 0 or 1

n is a positive integer from 20 to 150 and

$R^1$ is an aromatic hydrocarbon radical having from 6 to 20 carbon atoms, or a cycloalkylene radical having from 2 to 20 carbon atoms or a divalent radical of the formula

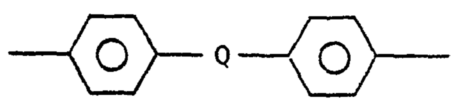

where Q is -O-, $-\overset{O}{\overset{\|}{C}}-$, $-\overset{O}{\overset{\|}{S}}-$, -S- or $C_xH_{2x}$

and x is a positive integer from 1 to 5.

Preferably X is $C_3H_6$ and $R^1$ is preferably 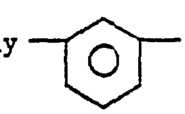 .

The polyetherimides suitable for use in the present invention are preferably substantially linear and are preferably soluble in organic solvents such as for example dichloromethane.

Polyetherimides having the above general formula are known. For example British Patent No. 1463300 in the name of General Electric Company describes such polyetherimides and a method of preparing them which method comprises reacting an aromatic bis(etheranhydride) of the formula;

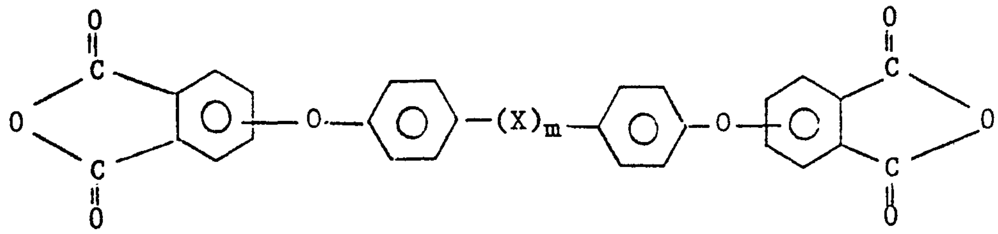

and an organic diamine of the formula;

$$H_2N — R^1 — NH_2$$

where X, m and $R^1$ are as defined above.

The aromatic bis(etheranhydride) and aromatic diamine may be reacted at ambient temperature in the presence of a dipolar aprotic organic solvent to produce a polyamide acid. Heating the polyamide acid at elevated temperatures converts it to the polyimide. Alternatively the aromatic bis(etheranhydride) and aromatic diamine may be reacted at elevated temperature in the presence of an organic solvent. Water of reaction is removed to facilitate polyetherimide formation. Preferably the polyetherimides for use in the present invention are prepared by the elevated temperature method which produces polyetherimides which are generally soluble in organic solvents and are relatively compatible with epoxy resins i.e. the polyetherimide and epoxy resin do not form two distinct phases. The polyetherimides produced by the ambient temperature method have been found to be generally insoluble in organic solvents. However, polyetherimides produced by the ambient temperature method may be used in the present invention provided they are sufficiently compatible with the epoxy resin.

Whichever method of preparation is used, the polyetherimides comprise essentially the chemically combined units defined above. The ends of the polymeric chains comprise groups derived from the reactants i.e. the bis(etheranhydride) and/or the organic diamine.

A particularly suitable polyetherimide for use in the present invention is a commercially available compound sold by General Electric under the trade name Ultem, having the formula;

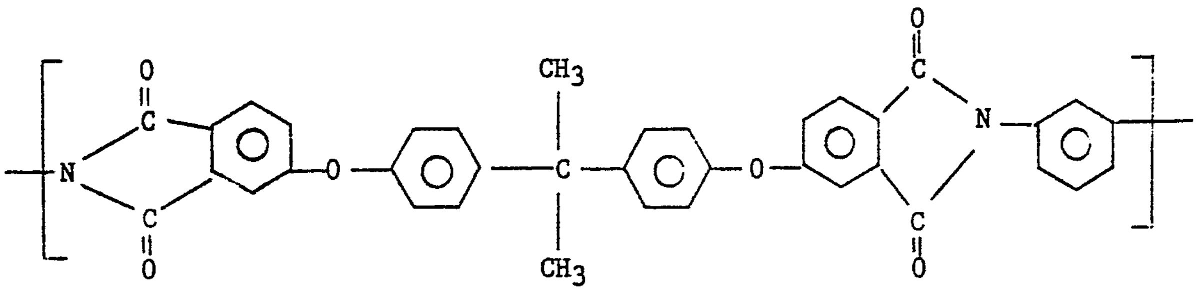

The amount of polyetherimide in the composition is preferably from 3 to 30 and more preferably 5 to 25 parts by weight per hundred parts of the epoxy resin. Preferably sufficient polyetherimide is added to increase the viscosity of the epoxy resin to at least 35 Poises.

Epoxy resins, i.e. substances containing on average more than one 1,2 epoxide group per molecule are known and include polyglycidyl esters and ethers. Particularly suitable epoxy resins include polyglycidal ethers of 4,4' diaminodiphenyl methane and polyglycidal ethers of 2,2' bis(4-hydroxyphenyl)propane. Preferably the epoxide content of the resins is from 3.5 to 5.9 equivalents per kilogram.

Suitable hardeners for epoxy resins are also known and include organic polyamines containing at least two amino hydrogen compounds such as for example diaminodiphenylsulphone and dicyandiamide. The amount of hardener used in the composition is preferably from 3 to 40 parts per hundred parts of the epoxy resin by weight.

A cure accelerator may be included in the composition. Suitable cure accelerators are known and a suitable accelerator for diaminodiphenylsulphone is a boron trifluoride-monoethyl amine complex. Preferably the amount of cure accelerator included in the composition is from 0.5 to 5 parts per hundred parts of epoxy resin by weight.

The compositions may be dissolved in a suitable solvent, such as, for example, methylene chloride, methyl ethyl ketone, chloroform or acetone. The amount of solvent in the composition is preferably from 30 to 300 parts per hundred parts of epoxy resin by weight, more preferably 75 to 150 parts.

Although the components of the composition may be mixed together in the absence of a solvent, the use of a suitable solvent facilitates the preparation of a composition according to the present invention

and also helps to ensure satisfactory impregnation of the fibres when the composition is used as a matrix for fibre reinforced articles. The solvent is preferably removed before curing the composition e.g. by heating to a temperature below the activation temperature of the hardener at a pressure below atmospheric pressure.

Compositions of the present invention may be cured by heating to a temperature of from 110 to 130°C for 1 to 6 hours followed by up to 7 hours at 180°C.

The invention includes a method of producing fibre reinforced articles which comprises impregnating a fibrous material with a hardenable epoxy resin composition, as described above, and curing the epoxy resin component. The curing may be carried out at a pressure above atmospheric pressure in order to reduce the void volume of the cured fibre reinforced article. Typically the curing pressure may be up to 1000 psi ($6.9 \times 10^6$ $N/m^2$). The invention also includes fibre reinforced articles produced by the method.

The invention is illustrated by reference to the following examples.

Examples 1 to 3

Three epoxy resin compositions were prepared containing different amounts of a polyetherimide sold by General Electric under the trade name ULTEM comprising the following chemically combined units,

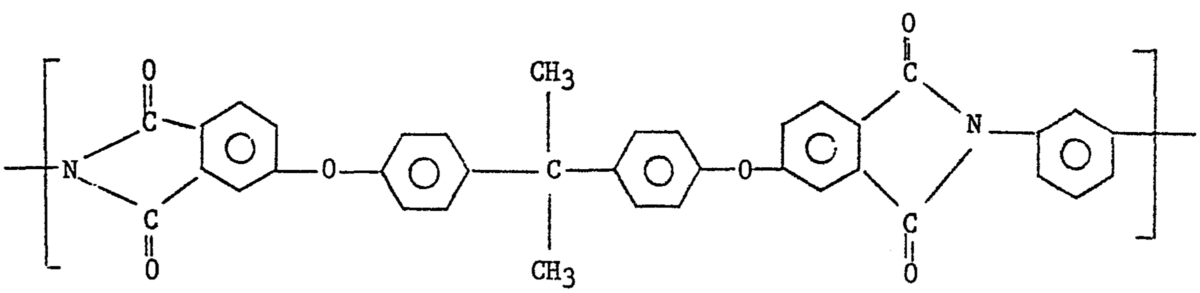

The compositions were prepared by dissolving the polyetherimide in 200 $cm^3$ of methylene chloride and then adding to this solution 200g of tetraglycidyl 4,4' diaminodiphenyl methane epoxy resin, sold by Ciba Geigy under the trade name CIBA MY720 (CIBA is a Registered Trade Mark). The solution was then heated to 125°C and degassed under reduced pressure to remove the methylene chloride solvent.

The viscosity of each of the three epoxy resin compositions containing the polyetherimide was measured at 100°C and 125°C using an ICI cone and plate viscometer. The viscosity at the same temperatures of a comparative composition prepared as described above except that the polyetherimide was omitted was also measured. The results given in Table 1 show that the inclusion of the polymer increases the viscosity of each of the compositions compared with the comparative composition. The compositions of Examples 2 and 3 have viscosities of greater than 40 poises at 125°C.

Table 1

Effect of Polyetherimide on the Viscosity of an Epoxy Resin Composition

| Example | Polyetherimide Content (pph based on wt of epoxy resin) | Viscosity (Poises) | |
|---|---|---|---|
| | | 100°C | 125°C |
| 1 | 10 | 37 | 22 |
| 2 | 15 | >40 | >40 |
| 3 | 20 | >40 | >40 |
| Comparative Composition | 0 | 2.0 | 0.6 |

The epoxy resin compositions containing the polyetherimide were heated to 130°C and 60g of the hardener diaminodiphenylsulphone was added. The temperature was maintained in the range 130 to 135°C for about 20 minutes until the diaminodiphenylsulphone had dissolved. The mixture was then degassed under reduced pressure.

The comparative composition without the polyetherimide was treated in the same manner and all four of the hardenable epoxy resin compositions were cured by pouring the compositions into stainless steel moulds preheated to a temperature of 140°C and placing the moulds in an oven at 130°C for 3 to 4 hours followed by 7 hours at 180°C.

The heat distortion temperature (ASTM D1637-61), Charpy impact resistance (ASTM D256-81, Method B), flexural strength and modulus (ASTM D790 M-81, Method 1) and water absorption were determined for each of the cured compositions. The water absorption was determined by measuring the increase in the weight of a sample of the cured resin after immersion in distilled water for 33 days at 80°C.

The results given in Table 2 show that the presence of the polyetherimide increases the impact strength and flexural strength of the composition without seriously affecting the water absorption of the resin.

**Table 2**

**Effect of Polyetherimide on the Physical Properties of Cured Compositions**

| Example | Polyetherimide Content (pph by wt of epoxy resin) | Heat Distortion Temperature (°C) | Flexural Strength ($MN/m^2$) | Flexural Modulus ($GN/m^2$) | Charpy Impact Resistance ($KJ/m^2$) | Water Absorption (%wt increase) |
|---|---|---|---|---|---|---|
| 1 | 10 | 200 | 102 | 3.6 | 5.5 | 4.7 |
| 2 | 15 | 187 | 109 | 3.9 | 6.5 | 5.6 |
| 3 | 20 | 161 | 79 | 3.5 | 6.4 | 4.2 |
| Comparative Composition | 0 | 215 | 47 | 3.5 | 1.7 | 4.4 |

Example 4

An epoxy resin composition was prepared containing 20 parts of polyetherimide per hundred parts of the epoxy resin by weight. The epoxy resin used was a polyglycidal ether of 2,2' bis(4 hydroxyphenyl) propane sold by Shell under the trade name EPIKOTE 828 (EPIKOTE is a trade mark). The polyetherimide was the same as used in Examples 1 to 3. The composition was prepared by the same method as used in Examples 1 to 3 and cured with the same hardener. However in addition to the diaminodiphenylsulphone 3 parts by weight of a cure accelerator were used per one hundred parts of epoxy resin. The cure accelerator used was a boron trifluoride-monoethyl amine complex sold by Shell Chemical Company under the trade name Shell BF3 (SHELL is a registered trade mark).

The epoxy resin - polyetherimide blend had a viscosity substantially greater than the epoxy resin without the polyetherimide.

The properties of the cured resin are given in Table 3 along with the properties of a comparative composition which comprised the same epoxy resin but without the polyetherimide. The results show that the presence of the polyetherimide increases the Charpy impact resistance without increasing the water absorption of the cured composition as compared with the comparative composition. The flexural strength of the cured epoxy resin composition of Example 4 was also greater than that of the comparative composition.

Table 3

| Example | Polyetherimide Content (pph by wt of epoxy resin) | Heat Distortion Temperature (°C) | Flexural Strength (MPa) | Flexural Modulus (GPa) | Charpy Impact Resistance $KJ/m^2$ | Water Absorption %wt increase |
|---|---|---|---|---|---|---|
| 4 | 20 | 162 | 139 | 3.5 | 25.3 | 5.5 |
| Comparative Composition | 0 | 210 | 124 | 3.4 | 12.3 | 5.5 |

Example 5

12g of dicyandiamide were dispersed in 50 $cm^3$ of dichloromethane by high shear mixing. The dispersion was added to and mixed with a blend of 200g of epoxy resin and 30g of polyetherimide. The polyetherimide and epoxy resin were the same as used in Examples 1 to 3. The mixture was heated to 115°C to remove the solvent, degassed under reduced pressure and then poured into a stainless steel mould. The composition was cured by heating the mould at 115°C for 2 hours, followed by 130°C for 4 hours and finally 180°C for 7 hours. The curing was carried out at atmospheric pressure.

The cured resin had the following properties;

| | | |
|---|---|---|
| heat distortion temperature (ASTM D1637-61) | | 222°C |
| flexural strength | ASTM (D790 M-81, Method 1) | 89 $MN/m^2$ |
| flexural modulus | | 4.2 $GN/m^2$ |
| Charpy impact resistance (ASTM D256-81 Method B) | | 17.4 $KJ/m^2$ |

Dicyandiamide is a known hardener for epoxy resins but it is suitable only for relatively viscous resins because it tends to settle out of less viscous resins. As it settles out the dicyandiamide concentration increases at the bottom of the mould which can cause undesirable exotherms. The epoxy resin CIBA MY 720 was not sufficiently viscous, without the polyetherimide to allow a comparison to be made between the epoxy resin - polyetherimide blend and the epoxy resin alone.

Example 6

Carbon fibre composite materials were prepared using the epoxy resin - polyetherimide composition according to Example 5 and the comparative composition used in Examples 1 to 3. (As explained above in Example 5 dicyandiamide is not suitable for curing the epoxy resin alone because of its relatively low viscosity).

Release paper was coated with the epoxy resin binders using a standard two roll mill to give a coating weight of $40g/m^2$. The composition according to the invention had good film forming and release properties. The resins were used to impregnate carbon fibres on a two roll impregnation machine. Sixteen sections measuring about

20 cm x 10 cm were cut from each of the prepreg sheets and the sections laid up unidirectionally. The material was then precured by heating the composition at 140°C for 20 minutes followed by curing at 180°C for one hour and then post curing at 190°C for 7 hours. The curing pressure was 600 psi ($4.1 \times 10^6$ $Nm^{-2}$).

The carbon fibre composition prepared using the epoxy resin - polyetherimide blend according to the invention had an interlaminar shear strength of 111 MPa. A composite prepared after storing this resin blend for one month at 20°C had an interlaminar shear strength of 115 MPa. The interlaminar shear strength of the comparative composition was 100 MPa. The interlaminar shear strength was determined according to Ministry of Defence Specification NM 565.

The shelf life of the composition according to the present invention was found to be about 1 year whereas the comparative composition had a shelf life of only about one week.

Claims

1. A hardenable epoxy resin composition comprising a curable epoxy resin, a hardener for the epoxy resin and a polyetherimide having the general formula;

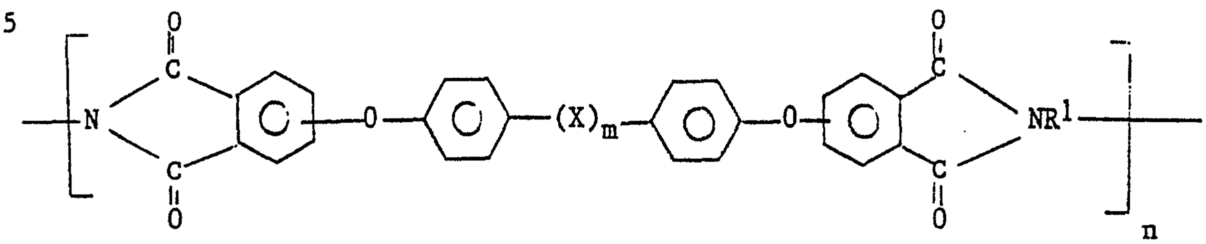

where X is $C_yH_{2y}$, or $-\overset{O}{\overset{\|}{C}}-$, or -S-

y is a positive integer from 1 to 5

m is 0 or 1

n is a positive integer from 20 to 150 and

$R^1$ is an aromatic hydrocarbon radical having from 6 to 20 carbon atoms, or a cycloalkylene radical having from 2 to 20 carbon atoms or a divalent radical of the formula

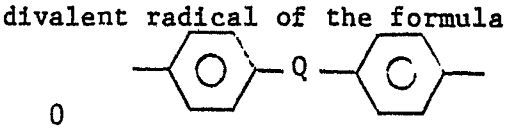

where Q is -O-, $-\overset{O}{\overset{\|}{C}}-$, $-\underset{\underset{O}{\|}}{\overset{\overset{O}{\|}}{S}}-$, -S- or $C_xH_{2x}$

and x is a positive integer from 1 to 5.

2. A hardenable epoxy resin composition as claimed in claim 1 in which the polyetherimide has the general formula

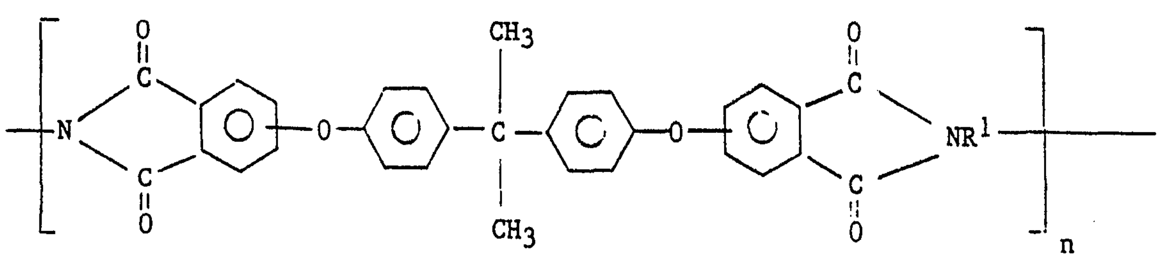

where $R^1$ is an aromatic hydrocarbon radical having from 6 to 20 carbon atoms, or a cycloalkylene radical having from 2 to 20 carbon atoms or a divalent radical of the formula

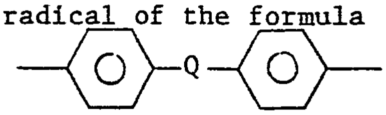

where Q is $-O-$, $-\overset{O}{\overset{\|}{C}}-$, $-\underset{O}{\underset{\|}{\overset{O}{\overset{\|}{S}}}}-$, $-S-$ or $C_xH_{2x}$

and n is a positive integer from 20 to 150.

**3.** A hardenable epoxy resin composition as claimed in claim 1 in which the polyetherimide has the general formula;

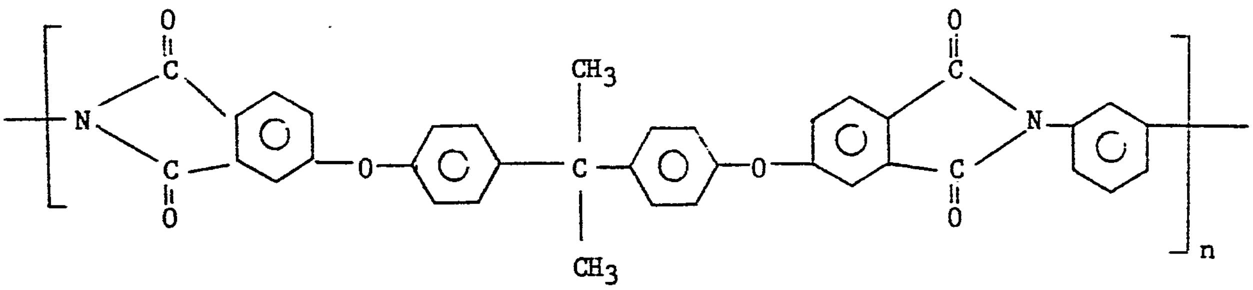

where n is a positive integer from 20 to 150.

**4.** A composition as claimed in either of claims 1 or 2 in which the epoxy resin is a polyglycidyl ether of 4,4' diaminodiphenylmethane or a polyglycidal ether of 2,2' bis(4-hydroxyphenyl)propane.

**5.** A composition as claimed in any of claims 1 to 4 in which the composition comprises 3 to 30 parts by weight of the polyetherimide per hundred parts of the epoxy resin.

**6.** A composition as claimed in any of claims 1 to 5 in which the hardener for the epoxy resin is selected from the group comprising diaminodiphenylsulphone and dicyandiamide.

**7.** A composition as claimed in any of claims 1 to 6 in which the amount of hardener in the composition comprises 3 to 40 parts by weight per one hundred parts of the epoxy resin.

**8.** A method of producing a fibre reinforced article comprises impregnating a fibrous material with a hardenable epoxy resin composition as claimed in any of claims 1 to 7 and curing the composition.

**9.** A fibre reinforced article prepared according to the method as claimed in claim 8.

0108476

European Patent Office

# EUROPEAN SEARCH REPORT

Application number

EP 83 30 5074

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | FR-A-2 329 721 (GENERAL ELECTRIC)<br>* Pages 30-32; claims *<br>----- | 1-9 | C 08 L 63/00 |
| | | | TECHNICAL FIELDS SEARCHED (Int. Cl. 3) |
| | | | C 08 L 63/00<br>C 08 L 79/00 |

The present search report has been drawn up for all claims

| Place of search | Date of completion of the search | Examiner |
|---|---|---|
| THE HAGUE | 02-02-1984 | STIENON P.M.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document